(19) **Europäisches Patentamt**
**European Patent Office**
**Office européen des brevets**

(11) **EP 3 993 428 A1**

(12) **EUROPEAN PATENT APPLICATION**
published in accordance with Art. 153(4) EPC

(43) Date of publication:
**04.05.2022 Bulletin 2022/18**

(21) Application number: **20882409.4**

(22) Date of filing: **22.10.2020**

(51) International Patent Classification (IPC):
***H04N 21/234*** (2011.01)

(52) Cooperative Patent Classification (CPC):
**H04N 21/234; H04N 21/2343; H04N 21/242;
H04N 21/43; H04N 21/44; H04N 21/4402**

(86) International application number:
**PCT/CN2020/122944**

(87) International publication number:
**WO 2021/083031 (06.05.2021 Gazette 2021/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.10.2019 CN 201911051113**

(71) Applicant: **ZTE Corporation**
**Shenzhen, Guangdong 518057 (CN)**

(72) Inventors:
• **LIN, Ya**
**Shenzhen, Guangdong 518057 (CN)**

• **SHEN, Can**
**Shenzhen, Guangdong 518057 (CN)**
• **ZHU, Fang**
**Shenzhen, Guangdong 518057 (CN)**
• **LIU, Jia**
**Shenzhen, Guangdong 518057 (CN)**
• **SUN, Jian**
**Shenzhen, Guangdong 518057 (CN)**

(74) Representative: **Betten & Resch**
**Patent- und Rechtsanwälte PartGmbB**
**Maximiliansplatz 14**
**80333 München (DE)**

(54) **TIME DELAY ERROR CORRECTION METHOD, TERMINAL DEVICE, SERVER, AND STORAGE MEDIUM**

(57) The embodiments of the present application relate to the field of augmented reality, and discloses a time delay error correction method, a terminal device, a server and a storage medium. In the embodiments of the present application, a video data packet is sent to a server, so that the server determines, according to the video data packet, pose data of a virtual object to be superimposed. The pose data of the virtual object returned by the server is received. An incremental change of the pose data is determined according to a time difference between a video frame corresponding to the pose data and a current video frame to be displayed, and the pose data is corrected according to the incremental change. The virtual object is superimposed into the current video frame to be displayed according to the corrected pose data.

**(Cont. next page)**

```
                              ┌─────────┐
                              │  start  │
                              └─────────┘
                                   │
                                   ▼
                                                              101
  ┌────────────────────────────────────────────────────────┐
  │         send a video data packet to a server for the    │
  │          server to determine, according to the          │
  │       video data packet, pose data of a virtual object  │
  │                    to be superimposed                   │
  └────────────────────────────────────────────────────────┘
                                   │
                                   ▼
                                                              102
  ┌────────────────────────────────────────────────────────┐
  │                   receive the pose data of              │
  │            the virtual object returned by the server    │
  └────────────────────────────────────────────────────────┘
                                   │
                                   ▼
                                                              103
  ┌────────────────────────────────────────────────────────┐
  │    determine an incremental change of the pose data     │
  │  according to a time difference between a video frame   │
  │ corresponding to the pose data of the virtual object to │
  │    be superimposed and a current video frame to be      │
  │    displayed, and correct the pose data according to    │
  │                  the incremental change                 │
  └────────────────────────────────────────────────────────┘
                                   │
                                   ▼
                                                              104
  ┌────────────────────────────────────────────────────────┐
  │    superpose the virtual object into the current video  │
  │      frame to be displayed according to                 │
  │                  the corrected pose data                │
  └────────────────────────────────────────────────────────┘
                                   │
                                   ▼
                              ┌─────────┐
                              │   end   │
                              └─────────┘
```

FIG. 1

**Description**

**CROSS-REFERENCE TO RELATED APPLICATION**

The present application is filed on the basis of the Chinese Patent Application 201911051113.3 filed on October 31, 2019, and claims priority of the Chinese patent application, the entire contents of which are incorporated herein by reference.

**TECHNICAL FIELD**

Embodiments of the present application relate to the field of augmented reality, and in particular, to a time delay error correction method, a terminal device, a server and a storage medium.

**BACKGROUND**

Augmented reality (AR) technology is a technology that skillfully integrates virtual information with the real world. It widely uses multimedia, 3D modeling, real-time tracking and registration, intelligent interaction, sensing and other technical means, to simulate the computer-generated virtual information such as texts, images, 3D models, music, videos and the like, and apply these information to the real world. The two kinds of information complement each other, therefore implementing "augmentation" of the real world. With the development of simultaneous localization and mapping (SLAM) technology, AR has been more and more widely used in education, games, industry and the like.

AR has high requirements for hardware performance and design of equipment. Current mainstream AR processing engines, such as Google's ARCore and Apple's ARKit, have limited their supported terminal platforms to a few high-configuration models. According to our experience with mainstream AR engines, even if qualified high configuration mobile terminals are used, the effect of running AR business is not ideal. The noticeable problem is that the terminal with high load has obvious heating, which leads to frequency reduction, resulting in performance degradation, and the effect of AR experience becomes worse.

In order to solve the problem that terminal performance affects the experience effect of AR business for a long time, one of the current solutions is to use the computing power of the cloud to process the time-consuming AR process, and put the AR processing such as feature extraction, matching and tracking with heavy calculation on the server.

The inventor has found that there are at least the following problems in the related technology: when adopting the cloud-based scheme for AR application scenarios with high real-time requirements, there will be a certain time delay between sending a request from a terminal to a server and receiving the position and posture information returned by the server. The time delay includes the duration of unpacking and decoding by the server, the duration of AR processing and the duration of network transmission. At this time, the real-world scenario seen by the terminal has changed to some extent from the time of sending the request, so a virtual object superimposed on the current frame according to the position and posture information returned by the server will cause an error, resulting in unsynchronization between the virtual information and the real world, which seriously affects the user experience.

**SUMMARY**

Embodiments of the present application provide a time delay error correction method, a terminal device, a server and a storage medium.

An embodiment of the present application provides a time delay error correction method, which includes: sending a video data packet to a server for the server to determine, according to the video data packet, pose data of a virtual object to be superimposed; receiving the pose data of the virtual object returned by the server; determining an incremental change of the pose data according to a time difference between a video frame corresponding to the pose data and a current video frame to be displayed, and correcting the pose data according to the incremental change; and superposing the virtual object into the current video frame to be displayed according to the corrected pose data.

An embodiment of the present application further provides a time delay error correction method, which includes: receiving a video data packet sent by a terminal device; determining, according to the video data packet, pose data of a virtual object to be superimposed; and returning the pose data to the terminal device for the terminal device to correct the pose data, and then superimpose, according to corrected pose data, the virtual object into a current video frame to be displayed.

An embodiment of the present application further provides a terminal device, which includes at least one processor, and a memory communicatively connected to the at least one processor. The memory stores instructions which, when executed by the at least one processor, cause the at least one processor to carry out the above-mentioned time delay error correction method.

An embodiment of the present application further provides a server, which includes at least one processor, and a memory communicatively connected to the at least one processor. The memory stores instructions which, when executed by the at least one processor, cause the at least one processor to carry out the above-mentioned time delay error correction method.

An embodiment of the present application further provides a computer-readable storage medium storing a computer program which, when executed by a processor, causes the processor to carry out the time delay error correction method applied to a terminal, or the above-mentioned time delay error correction method applied to a server.

## BRIEF DESCRIPTION OF DRAWINGS

One or more embodiments are illustrated by the corresponding figures in the drawings, and these illustrations do not constitute limitations on the embodiments.

Fig. 1 is a flowchart of a time delay error correction method according to a first embodiment of the present application;

Fig. 2 is a flowchart of a time delay error correction method according to a second embodiment of the present application;

Fig. 3 is a diagram of a time delay error correction system according to the second embodiment of the present application;

Fig. 4 is a flowchart of a time delay error correction method according to a third embodiment of the present application;

Fig. 5 is a schematic diagram of a terminal device according to a fourth embodiment of the present application; and

Fig. 6 is a structural diagram of a server according to a fifth embodiment of the present application.

## DETAILED DESCRIPTION

In order to make the objectives, technical schemes and advantages of the embodiments of the present application clearer, the embodiments of the present application will be described in detail below in conjunction with the accompanying drawings. However, a person having ordinary skills in the art can understand that in the embodiments of the present application, many technical details are provided in order to make readers better understand the present application. However, even without these technical details and various changes and modifications based on the following embodiments, the technical schemes claimed in the present application may be implemented. The following embodiments are divided for the convenience of description, and do not constitute any limitation on the specific implementations of the present application. The embodiments may be combined and referenced with each other on the premise of no contradiction.

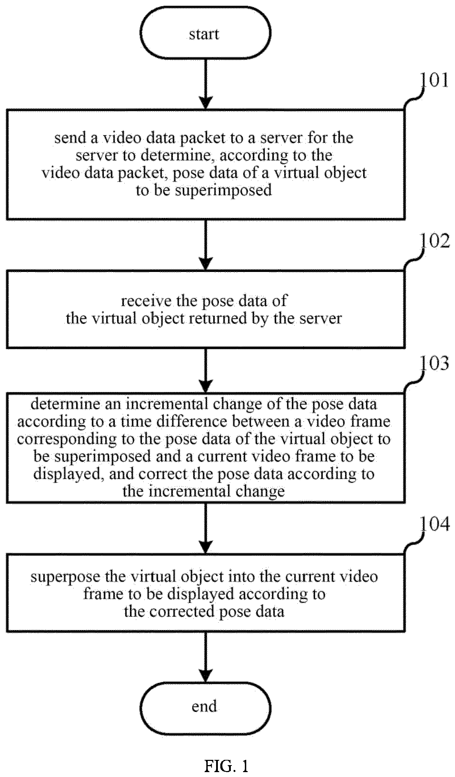

The first embodiment of the present application relates to a time delay error correction method, which is applied to a terminal. In this embodiment, a video data packet is sent to a server, then the server determines, according to the video data packet, pose data of a virtual object to be superimposed. The pose data of the virtual object returned by the server is received; an incremental change of the pose data is determined according to a time difference between a video frame corresponding to the pose data and a current video frame to be displayed, and the pose data is corrected according to the incremental change. The virtual object is superimposed into the current video frame to be displayed according to the corrected pose data. The implementation details of the time delay error correction method of this embodiment will be described in detail below. The following contents are only provided for the convenience of understanding, and are not necessary for the implementation of this scheme. The specific process is shown in FIG. 1, including the following steps.

At step 101, a video data packet is sent to a server, so that the server determines, according to the video data packet, pose data of a virtual object to be superimposed.

The terminal sends the acquired video data packet about the original image to the server, which receives the video data packet and analyzes the video frame data in the video data packet load to calculate the pose data of the virtual object, and then sends the identification information of the virtual object and the pose data corresponding to the virtual object to the terminal device.

In an example, the terminal device uses a camera or an AR glasses device to acquire the data of the original image in the real world at a certain frame rate, compresses and encodes the obtained original image data, encapsulates the encoded original image data in a data packet suitable for network transmission, and sends the packed video data packet to the server. The server obtains video data in the corresponding format by analyzing the video data packet, extracts and compares the target features of the obtained video data, completes the target identification, matches the identified target object with the virtual object database to obtain the corresponding virtual object, and calculates the pose data of the virtual object. Finally, the server sends the identification information of the virtual object and the pose data corresponding to the virtual object to the terminal device.

It should be noted that the virtual object may be an object in the form of 3D model, image, text, video, and the like, but it is not limited to these forms, which are not exemplified here. The pose data of the virtual object includes the position data and the posture data of the virtual object on the video frame image, and its corresponding mathematical form may be any one of transition matrix (rotation matrix and translation vector), homography matrix, essential matrix, and the like. In this embodiment, for example, the pose data includes a rotation matrix R and a translation vector T. In addition, the pose data may further include the video image frame number corresponding to the pose.

At step 102, the pose data of the virtual object returned by the server is received.

The terminal device receives the pose data of the virtual object sent by the server, analyzes the pose data of the virtual object, obtains the rotation matrix R and the translation vector t, and the video frame number corresponding to the pose, and downloads the corresponding virtual object.

At step 103, an incremental change of the pose data is determined according to a time difference between a video frame corresponding to the pose data and a current video frame to be displayed, and the pose data is corrected according to the incremental change.

Based on the time difference between the video frame corresponding to the pose data and the current video frame to be displayed, the rotation matrix increment and the translation vector increment are obtained according to the angular velocity and acceleration information of the inertial measurement unit (IMU). The pose data of the virtual object is corrected using the obtained rotation matrix increment and the translation vector increment, and the pose data of the virtual object in the current video frame to be displayed is quickly calculated.

In an example, the terminal sends the video image of the Nth frame to the server, which processes the video image of the Nth frame to obtain the pose data of the virtual object, returns it to the terminal device, and informs the terminal device that the video frame corresponding to the pose data is the video image of the Nth frame. At this time, the terminal device determines the time difference between the current video frame to be displayed and the video image of the Nth frame. For example, the video picture of the Nth frame has been played, and now the video of the [N+k]th frame is to be played, where the [N+k]th frame is the current video frame to be displayed. At this time, the terminal device needs to calculate the time difference between the [N+k]th frame and the Nth frame. The time difference between the video frame corresponding to the pose data and the video frame to be displayed may be obtained by multiplying the frame number difference k by the frame interval duration.

Based on the obtained time difference, according to the angular velocity and acceleration information of IMU, the position and posture change of the virtual object from the Nth frame image to the [N+k]th frame is calculated. The rotation matrix increment is calculated according to the angular velocity, and the translation vector increment is obtained by integrating the acceleration. According to the incremental change of the obtained pose data, the pose data R and t are corrected, and the specific correction method is shown in Formula (1):

$$R' = \Delta R * R, t' = \Delta t + t. \qquad (1)$$

The IMU in this embodiment includes a gyroscope and an accelerometer, and may return the angular velocity and acceleration information in real time. The calculation of the incremental change of position and posture according to the angular velocity and acceleration information from the IMU is small in amount and takes little time, so the correction process will not bring too much performance consumption to the terminal.

In another example, in order to better integrate the virtual content with the real world, correction of the pose data of the virtual object may further include detection and estimation of the ambient light, and adjustment of the virtual content in order to be consistent with the ambient light, thereby making the virtual content more realistic.

At step 104, the virtual object is superimposed into the current video frame to be displayed according to the corrected pose data.

According to the corrected rotation matrix and the corrected translation vector, rendering is performed in the video picture of the [N+k]th frame, and the video picture superimposed with the virtual content is obtained and presented to the user.

In practical application, the terminal device may start two threads. One thread is configured for video data acquisition, coding and packet sending, and the other thread is configured to receive the pose data of the virtual object returned by the server, and download the virtual object for real-time rendering.

It is not difficult to find that in this embodiment, the terminal sends the video data packet to the server for the server to determine the pose data of the virtual object, so that the time-consuming pose data analysis process may be processed by the computing power of the external server. The performance consumption of the terminal will not be increased because the analysis process is not carried out in the terminal. Then, the terminal device determines the incremental change corresponding to the pose data according to the time difference between the video frame corresponding to the pose data and the current video frame to be displayed, corrects the pose data of the virtual object according to the obtained incremental change, and superimposes the virtual object into the current video frame to be displayed with the corrected pose data. By correcting the pose data, the accuracy of the position of the virtual object superimposed into the current video frame to be displayed is ensured, so that the problem of asynchronization between the virtual information and the real world caused by time delay is eliminated, and the user experience is improved.

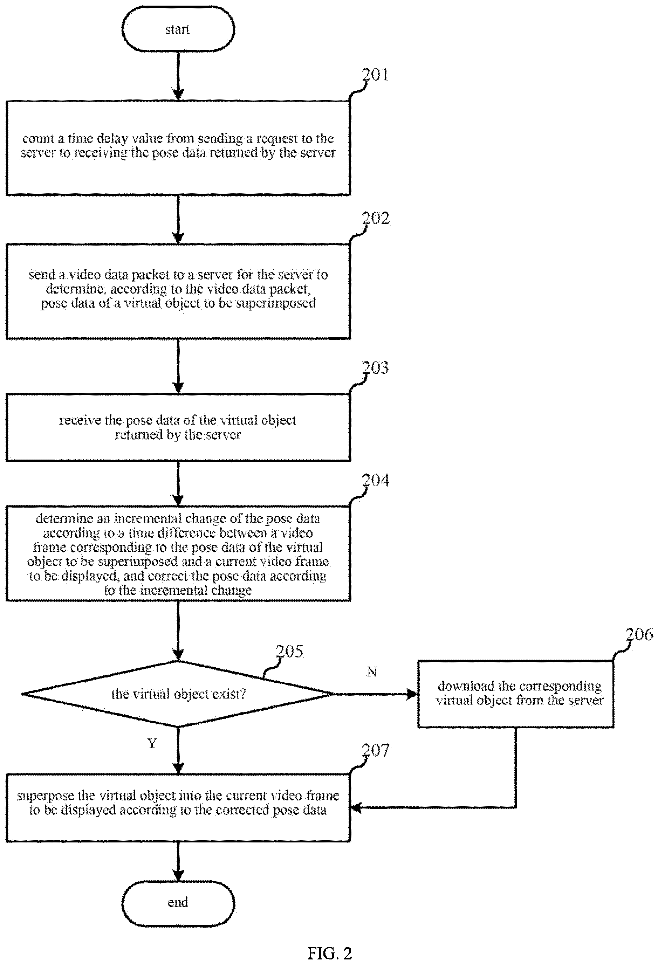

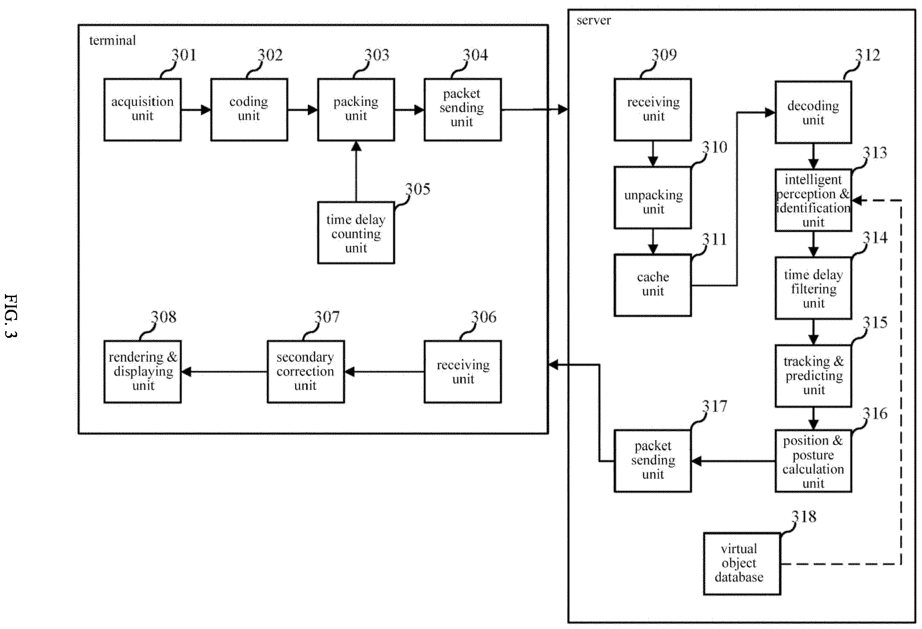

The second embodiment of the present application relates to a time delay error correction method. The second embodiment is roughly the same as the first embodiment, while the main difference is that: in the second embodiment of the present application, before sending the video data packet to the server, the time delay value from sending the request to the server to receiving the pose data returned by the server is counted; and after receiving the pose data of the virtual object returned by the server, it is determined whether the virtual object exists, and if it does not exist, the corresponding virtual object is downloaded from the server. The specific flow is shown in FIG. 2, and the corresponding time delay error correction system is shown in FIG. 3.

At step 201, a time delay value from sending a request to the server to receiving the pose data returned by the server is counted.

The time delay counting unit 305 in the terminal device records the time when each video data packet is sent to the server and the time when the pose data returned by the server is received, and calculates the difference between the two times, which is the time delay value. Due to the instability of the network, the time delay has real-time variability.

In an example, the time delay counting unit 305 records the sending time of the video data packet corresponding to the Nth frame of the video image as Tns, and records the time of receiving the pose data packet returned by the server as Tnr. Therefore, the time delay value from sending the request to the server to receiving the pose data returned by the server is T = Tnr - Tns. The terminal may send the time delay value to the server for the server to filter the received delay data to obtain the average delay.

It should be noted that when the terminal sends the video data packet to the server for the first time, there is no time delay value in the video data packet because the sending and receiving process is not completed once. That is, the time delay value sent to the server is the time delay value generated during the previous time when the terminal sent data to the server and received data returned by the server.

At step 202, a video data packet is sent to a server for the server to determine, according to the video data packet, pose data of a virtual object to be superimposed.

The time delay value calculated in step 201 and the video frame obtained by encoding the acquired original image data are packed in a data packet suitable for network transmission, and sent to the server for the server to generate pose data of the virtual object according to the time delay value.

In an example, the terminal device uses the acquisition unit 301, such as camera device or an AR glasses device, to acquire the data of the original image in the real world at a frame rate of 30 frames per second, and uses the encoding unit 302 to perform H264 encoding on the obtained original image data. The packing unit 303 packs the time delay T transmitted by the time delay counting unit 305 in the RTP extension header, and packs the encoded video data in H264 format in the RTP payload according to rfc3984, which are sent to the server through the packet sending unit 304. The server receives the video data packet, analyzes the video frame data in the video data packet load, completes the target identification, and matches the identified object with the virtual object database to obtain the ID of the corresponding virtual object. After that, the server tracks and predicts the posture of the target delayed by time T based on the current frame according to the time delay T, calculates the pose data of the virtual object according to the posture of the target delayed by time T based on the current frame, and sends the ID of the virtual object and the pose data corresponding to the virtual object to the terminal.

At step 203, the pose data of the virtual object returned by the server is received.

The pose data of the virtual object sent by the server is received and analyzed to obtain the rotation matrix and the translation vector, as well as the video frame number corresponding to the position and posture and the corresponding virtual content.

In an example, the receiving unit 306 in the terminal receives the RTP packet sent by the server, and analyzes the pose data of the virtual object: the rotation matrix R, the translation vector t, the virtual object ID, and the video frame number corresponding to the pose data.

At step 204, an incremental change of the pose data is determined according to a time difference between a video frame corresponding to the pose data and a current video frame to be displayed, and the pose data is corrected according to the incremental change.

According to the angular velocity and acceleration information of the IMU, the rotation matrix increment and the translation vector increment are respectively obtained according to the time difference between the video frame corresponding to the pose data and the current video frame to be displayed. The pose data of the virtual object is corrected using the obtained rotation matrix increment and the translation vector increment, and the pose data of the virtual object in the current video frame to be displayed is quickly calculated.

In an example, the terminal sends the video image of the Nth frame to the server, which predicts the pose data of the virtual object in the video image of the [N+m]th frame according to the calculated time delay value T, returns the data to the terminal device, and informs the terminal device that the video frame corresponding to the pose data is the video image of the [N+m]th frame, where m is the number of video frames played within the time range of the time delay value T. At this time, the terminal device confirms the time difference between the current video frame to be displayed and the video image of the [N+m]th frame. For example, the video picture of the [N+m]th frame has been played, and now the video of the [N+m+k]th frame is to be played, where the [N+m+k]th frame is the current video frame to be displayed. At this time, the secondary correction unit 307 of the terminal device will calculate the time difference between the [N+m+k]th frame and the [N+m]th frame, and the time difference between the video frame corresponding to the pose data and the current video frame to be displayed may be obtained by multiplying the frame number difference k by the frame interval duration.

Based on the obtained time difference, according to the angular velocity and acceleration information from the IMU, the position and posture change of the virtual object from the image of the [N+m]th frame to the [N+m+k]th frame is obtained, where the rotation matrix increment ∆R is calculated according to the angular velocity, and the translation vector increment ∆t is obtained by integrating the acceleration. The secondary correction unit 307 corrects the pose data R and t according to the incremental changes of the obtained pose data, and the specific correction method is shown in Formula (2):

$$R' = \Delta R * R, t' = \Delta t + t. \qquad (2)$$

The IMU in this step includes a gyroscope and an accelerometer, and may return angular velocity and acceleration information in real time. The calculation of the incremental change of position and posture according to the angular velocity and acceleration information from the IMU is small in amount and takes little time, so the correction process will not bring too much performance consumption to the terminal.

At step 205, it is determined whether the virtual object already exists.

When it is determined that no virtual object consistent with the received virtual object ID number exists in the terminal device currently, step 206 is executed; when the terminal device determines that a virtual object matching the received virtual object ID number already exists, step 207 is directly executed.

In an example, it is determined whether the virtual object corresponding to the received ID of the virtual object already exists in the terminal, if it does not exist, the virtual object is downloaded from the server, and if it exists, the virtual object is superimposed into the current video to be displayed. For example, in the process of AR virtual interaction, if the virtual object appears in the previous video picture, this virtual object with the ID number already stored in the terminal device may be called directly in the terminal without being downloaded from the server. If the virtual object appears in the interaction for the first time, and this virtual object with the ID number is not stored in the terminal device, this virtual object with the ID number from the server needs to be downloaded.

At step 206, the corresponding virtual object is downloaded from the server.

The corresponding virtual object is searched from the virtual object database in the server according to the ID number of the virtual object, and then downloaded to the terminal.

At step 207, the virtual object is superimposed into the current video frame to be displayed according to the corrected pose data.

The rendering and displaying unit 308 renders and displays the virtual object in the currently acquired real image according to the corrected pose data R' and t'.

It should be noted that there is no obvious sequence of steps 204 and 205 in this embodiment, and a person having ordinary skills in the art may arrange the sequence of the steps to be executed according to an implementation habit.

It is not difficult to find that in the second embodiment of the present application, firstly, the pose data of the virtual object is preliminarily corrected at the server according to the time delay value counted by the terminal, which reduces the consumption of terminal performance and is beneficial to the accuracy of subsequent position and posture correction. Then, according to the time difference between the video frame corresponding to the pose data and the current video frame to be displayed, and according to the incremental change of the pose data acquired by the IMU of the terminal, the pose data of the virtual object is corrected for the second time, thereby further ensuring the accuracy of the position of the virtual object superimposed into the real picture, eliminating the problem that the virtual information and the real world are not synchronized due to the time delay, and improving the user experience.

Since it takes a certain amount of time for the server to unpack and decode the video data packet transmitted by the terminal, it is also a time-consuming process to obtain the pose data of the virtual object. At the same time, the network transmission itself has a certain transmission duration, so there is a time delay in the process from the request of the terminal to the reception of the pose data returned by the server. However, the server does not know the specific time delay value of this process at first. The terminal needs to send the time delay value generated in each data transmission to the server together with the video data packet, so that the server may predict the position and posture of the virtual object by the tracking algorithm according to the obtained time delay value, and preliminarily correct the position and posture of the virtual object to be superimposed into the current video frame to be displayed, thereby eliminating the problem of unsynchronization between the virtual information and the real world to some extent.

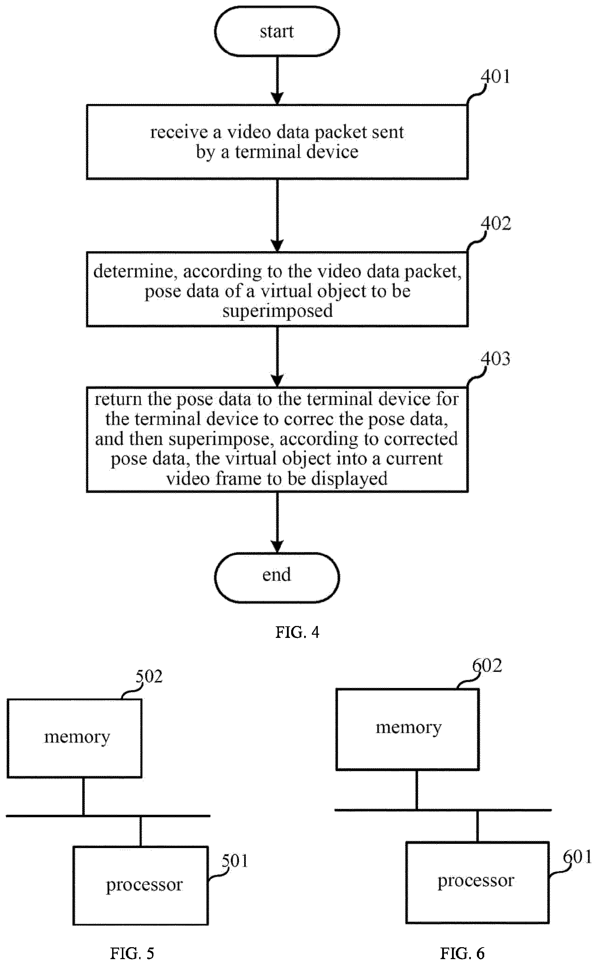

The third embodiment of the present application relates to a time delay error correction method, which is applied to a server. In this embodiment, a video data packet sent by a terminal device is received; pose data of a virtual object to be superimposed is determined according to the video data packet; and the pose data is returned to the terminal device for the terminal device to correct the pose data, and then superimpose, according to corrected pose data, the virtual object into a current video frame to be displayed. The implementation details of the time delay error correction method in this embodiment will be described in detail below. The following contents are only provided for the convenience of understanding, and are not necessary for the implementation of this scheme. The specific flow is shown in FIG. 4, and the corresponding time delay error correction system is shown in FIG. 3.

At step 401, a video data packet sent by a terminal device is received.

The server receives the video data packet sent by the terminal from the network. The video data packet contains the video frame data and the time delay value from sending the request to the server to receiving the pose data returned by the server, where the time delay value is counted by the terminal device previous time.

In an example, the receiving unit 309 receives a video packet sent by the terminal. The video packet is in RTP format. The unpacking unit 310 analyzes the video packet, extracts the video frame data in the RTP payload and caches it into the cache unit 311, and extracts the time delay value T and send it to the time delay filtering unit 314.

At step 402, pose data of a virtual object to be superimposed is determined according to the video data packet.

Through feature extraction, target recognition and matching technology, the original image data obtained by decoding is identified by target perception, and the identified target is matched with the object in the virtual object database to obtain the corresponding virtual object. According to the time delay T, the posture of the target after the current frame is delayed by time T is tracked and predicted, and the pose data of the virtual object is calculated. Then the server sends the virtual object and the pose data corresponding to the virtual object to the terminal.

In an example, the decoding unit 312 decodes the video frame data in the cache unit to obtain the original image YUV data. The intelligent perception and identification unit 313 perceptually identifies the decoded YUV data by feature extraction, target identification and matching technology, matches the identified target with the template in the virtual object database 318, obtains the matched virtual object, and records the object ID of the matched virtual object. Here, the Oriented Fast and Rotated Brief (ORB) algorithm is used for feature extraction. The original image is divided into three pyramid layers, and feature points are extracted from each layer respectively. In order to make the feature points evenly distributed, the original image is rasterized. A point with the highest matching score in each raster is taken as a feature point. In practical application, other target recognition algorithms may also be selected according to the server performance.

The tracking and predicting unit 315 tracks and predicts the posture of the target superimposed with the virtual object after the time delay value, and then the position and posture calculation unit 316 determines the pose data of the virtual object according to the position and posture of the target after the time delay value.

In the specific implementation, before the tracking and predicting unit 315 tracks and predicts the posture of the target superimposed with the virtual object after the time delay value, the time delay filtering unit 314 may further perform a filter process according to the current input time delay value and the historical time delay value to obtain an average time delay Tavg(k), which is specifically shown in Formula (3):

$$\text{Tavg}(k) = a * T(k) + (1 - a) * \text{Tavg}(k-1), \qquad (3)$$

where a may be set according to the experience value, such as 0.95.

The tracking and predicting unit 315 uses a Markov chain model to accurately predict the state of the next moment according to the state of the previous moment and the historical state in combination with the transition probability matrix in the Markov chain, and calculates the position and the posture of the target delayed by duration Tavg(k) relative to the current frame through this algorithm.

After tracking and predicting the position and posture of the target superimposed with the virtual object after delaying the predicted time delay value, the position and posture calculation unit 316 uses Perspective-n-Point (PnP) algorithm to generate pose data of the virtual object according to the position and posture of the target after delaying the predicted time delay value Tavg(k). The pose data includes a rotation matrix R and a translation vector T.

At step 403, the pose data is returned to the terminal device for the terminal device to correct the pose data, and then superimpose, according to corrected pose data, the virtual object into a current video frame to be displayed.

The calculated pose data, the frame number corresponding to the pose data, and the virtual object ID are packed into a RTP packet, and sent to the terminal through the packet sending unit 317. The terminal determines the incremental change of the pose data according to the time difference between the video frame corresponding to the pose data and the current video frame to be displayed, corrects the pose data according to the incremental change, and superimpose the virtual object into the current video frame to be displayed according to the corrected pose data.

In practical application, the server side starts two threads. One thread is configured to receive packets, and caches them after analyzing, and the other thread is configured to take video frames from the cache for AR processing.

In the third embodiment of the present application, the server receives the video frame data and the time delay value sent by the terminal, determines the pose data of the virtual object to be superimposed, and reduces the consumption of the terminal performance. Meanwhile, it performs primary correction on the pose data of the virtual object superimposed into the target, thereby eliminating the position and posture error problem caused by the time delay to a certain extent. The pose data after the primary correction is transmitted to the terminal for the terminal to correct the initially corrected pose data, and then the virtual content or the virtual object is superimposed into the current video frame to be displayed according to the pose data after the secondary correction, so as to further ensure the accuracy of the position where the virtual object is superimposed into the real picture, thereby eliminating the problem that the virtual information and the real world are not synchronized due to time delay, reducing the perceived delay, and improving the user experience.

The server receives the time delay value counted by the terminal device, uses the obtained time delay value to predict the position and posture of the virtual object by the tracking algorithm, and preliminarily corrects the position and posture of the virtual object to be superimposed into the current video frame to be displayed, so as to reduce the position error of the virtual object in the current video frame to be displayed.

The server filters the current time delay value and the historical time delay value transmitted by the terminal to obtain the predicted time delay value. This filtering method enables the server to obtain a smoother predicted time delay value, so that the position and posture of the virtual object predicted by the predicted time delay value is also accurate.

The step division of the above methods is only for the sake of clarity, and a plurality of steps may be combined into one step or a certain step may be split into a plurality of steps, as long as the same logical relationship is included, the methods are within the protection scope of the present application. Adding insignificant modification or introducing insignificant design to the algorithm or the process, without changing the core design of the algorithm and process, are within the protection scope of the present application.

A fourth embodiment of the present application relates to a terminal device, as shown in Fig. 5. The terminal device includes at least one processor 501, and a memory 502 communicatively connected to at least one processor. The memory 502 stores instructions executable by at least one processor 501, and the instructions are executed by the at least one processor 501, so that the at least one processor 501 may execute the time delay error correction method in the above-mentioned first or second embodiment.

The memory 502 and the processor 501 are connected by a bus. The bus may include any number of interconnected buses and bridges, and connect one or more processors 501 and various circuits of the memory 502 together. The bus may further connect various other circuits together, such as peripheral devices, voltage regulators, power management circuits, which are well known in the art, and then will not be further described herein. The bus provides an interface between the bus and a transceiver. The transceiver may be one element or a plurality of elements, such as a plurality of receivers and transmitters, providing a unit for communicating with various other devices on a transmission medium. The data processed by the processor 501 is transmitted on a wireless medium through an antenna. Further, the antenna receives the data and transmits the data to the processor 501.

The processor 501 is configured to manage the bus and general processing, and may further provide various functions, including timing, peripheral interface, voltage regulation, power management and other control functions. The memory 502 may be used to store data used by the processor 501 when performing an operation.

The fifth embodiment of the present application relates to a server, as shown in Fig. 6. The server includes at least one processor 601, and a memory 602 communicatively connected to at least one processor. The memory 602 stores instructions executable by at least one processor 601, and the instructions are executed by the at least one processor 601 to enable the at least one processor 601 to execute the time delay error correction method in the third embodiment.

The memory 602 and the processor 601 are connected by a bus. The bus may include any number of interconnected buses and bridges, and connect one or more processors 601 and various circuits of the memory 602 together. The bus may further connect various other circuits together, such as peripheral devices, voltage regulators, power management circuits, which are well known in the art, and then will not be further described herein. The bus provides an interface between the bus and a transceiver. The transceiver may be one element or a plurality of elements, such as a plurality of receivers and transmitters, providing a unit for communicating with various other devices on a transmission medium. The data processed by the processor 601 is transmitted on a wireless medium through an antenna. Further, the antenna receives the data and transmits the data to the processor 601.

The processor 601 is configured to manage the bus and general processing, and may further provide various functions, including timing, peripheral interface, voltage regulation, power management and other control functions. The memory 602 may be used to store data used by the processor 601 when performing an operation.

The sixth embodiment of the present application relates to a computer-readable storage medium, which stores a computer program. The above method embodiments are implemented when the computer program is executed by a processor.

That is, it can be understood by a person having ordinary skills in the art that all or part of the steps in implementing the above method embodiments may be completed by instructing related hardware through a program, which is stored in a storage medium and includes several instructions to make a device (which may be a single chip microcomputer, a chip, and the like) or a processor execute all or part of the steps of the method embodiments of the present application. The aforementioned storage medium includes: USB flash disk, mobile hard disk, read only memory (ROM), random access memory (RAM), magnetic disk or optical disk and other media that may store program codes.

The embodiments of the present application provide a time delay error correction method, a terminal device, a server and a storage medium, which can eliminate the problem that the virtual information and the real world are not synchronized due to time delay without increasing performance consumption of the terminal, and improve user experience.

In the embodiments of the present application, the terminal device sends the video data packet to the server for the server to determine the pose data of the virtual object, so that the time-consuming pose data analysis process may be processed by the computing power of the external server, and the performance consumption of the terminal will not be increased because the analysis process is not carried out in the terminal. Then, the terminal device determines the incremental change corresponding to the pose data according to the time difference between the video frame corresponding to the pose data and the current video frame to be displayed, corrects the pose data of the virtual object according to the obtained incremental change, and superimposes the virtual object into the current video frame to be displayed with the corrected pose data. By correcting the pose data, the accuracy of the position of the virtual object superimposed into the current video frame to be displayed is ensured, so that the problem of asynchronization between the virtual information and the real world caused by time delay is eliminated, and the user experience is improved.

It can be understood by a person having ordinary skills in the art that the above-mentioned embodiments are specific embodiments to implement the present application, and in practical application, various changes may be made in form and details without departing from the spirit and scope of the present application.

**Claims**

1. A time delay error correction method, comprising:

   sending a video data packet to a server, so that the server determines, according to the video data packet, pose data of a virtual object to be superimposed;
   receiving the pose data of the virtual object returned by the server;
   determining an incremental change of the pose data according to a time difference between a video frame corresponding to the pose data and a current video frame to be displayed, and correcting the pose data according to the incremental change; and
   superimposing the virtual object into the current video frame to be displayed according to the corrected pose data.

2. The time delay error correction method of claim 1, wherein before the step of sending a video data packet to a server, the time delay error correction method further comprises:

   counting a time delay value from sending a request to the server to receiving the pose data returned by the server; and
   the step of sending a video data packet to a server comprises:
   encapsulating the time delay value and a video frame obtained by encoding acquired original image data in a data packet, and sending the data packet to the server, so that the server determines the pose data of the virtual object according to the time delay value.

3. The time delay error correction method of claim 1, wherein the pose data comprises a rotation matrix and a translation vector; and
   the step of determining an incremental change of the pose data according to a time difference between a video frame corresponding to the pose data and a current video frame to be displayed comprises:
   obtaining a rotation matrix increment according to angular velocity information of an inertial measurement unit, called an IMU, and obtaining a translation vector increment according to acceleration information of the IMU and the time difference between the video frame corresponding to the pose data and the current video frame to be displayed.

4. The time delay error correction method of claim 3, wherein the step of correcting the pose data according to the incremental change comprises:

   taking a product of the rotation matrix and the rotation matrix increment as a corrected rotation matrix; and
   taking a sum of the translation vector and the translation vector increment as a corrected translation vector.

5. The time delay error correction method of any one of claims 1 to 4, wherein after the step of receiving the pose data of the virtual object returned by the server, the time delay error correction method further comprises:

   determining whether the virtual object already exists; and
   downloading the virtual object from the server in response to that the virtual object does not exist.

6. A time delay error correction method, comprising:

   receiving a video data packet sent by a terminal device;
   determining, according to the video data packet, pose data of a virtual object to be superimposed; and
   returning the pose data to the terminal device, so that the terminal device corrects the pose data, and then superimposes, according to corrected pose data, the virtual object into a current video frame to be displayed.

7. The time delay error correction method of claim 6, wherein the video data packet comprises a time delay value, counted by the terminal device, from sending a request to the server to receiving the pose data returned by the server; and
   the step of determining, according to the video data packet, pose data of a virtual object to be superimposed comprises:

   tracking and predicting a posture of a target superimposed with the virtual object after delaying the time delay value; and
   determining the pose data of the virtual object according to the posture of the target after delaying the time delay value.

8. The time delay error correction method of claim 7, wherein before the step of tracking and predicting a posture of a target superimposed with the virtual object after delaying the time delay value, the time delay error correction method further comprises:

   filtering the time delay value according to the time delay value and a historical time delay value, to obtain a predicted time delay value;
   the tracked and predicted posture of the target superimposed with the virtual object after delaying the time delay value is:
   a tracked and predicted posture of the target superimposed with the virtual object after delaying the predicted time delay value.

9. A terminal device, comprising:

   at least one processor; and
   a memory communicatively connected to the at least one processor; wherein
   the memory stores instructions which, when executed by the at least one processor, cause the at least one processor to perform the time delay error correction method of any one of claims 1 to 5.

10. A server, comprising:

    at least one processor; and
    a memory communicatively connected to the at least one processor; wherein
    the memory stores instructions which, when executed by the at least one processor, cause the at least one processor to perform the time delay error correction method of any one of claims 6 to 8.

11. A computer-readable storage medium storing a computer program which, when executed by a processor, causes the processor to perform the time delay error correction method of any one of claims 1 to 5 or the time delay error correction method of any one of claims 6 to 8.

FIG. 1

start

201

count a time delay value from sending a request to the server to receiving the pose data returned by the server

202

send a video data packet to a server for the server to determine, according to the video data packet, pose data of a virtual object to be superimposed

203

receive the pose data of the virtual object returned by the server

204

determine an incremental change of the pose data according to a time difference between a video frame corresponding to the pose data of the virtual object to be superimposed and a current video frame to be displayed, and correct the pose data according to the incremental change

205

the virtual object exist?

N

206

download the corresponding virtual object from the server

Y

207

superpose the virtual object into the current video frame to be displayed according to the corrected pose data

end

FIG. 2

FIG. 3

```
          ┌─────────┐
          │  start  │
          └────┬────┘
               │                              401
          ┌────▼──────────────────┐
          │ receive a video data  │
          │    packet sent        │
          │  by a terminal device │
          └────┬──────────────────┘
               │                              402
          ┌────▼──────────────────────────┐
          │ determine, according to the   │
          │   video data packet,          │
          │ pose data of a virtual object │
          │      to be superimposed       │
          └────┬──────────────────────────┘
               │                              403
          ┌────▼──────────────────────────────┐
          │ return the pose data to the        │
          │ terminal device for the terminal   │
          │ device to correc the pose data,    │
          │ and then superimpose, according to │
          │ corrected pose data, the virtual   │
          │ object into a current video frame  │
          │         to be displayed            │
          └────┬───────────────────────────────┘
               │
          ┌────▼────┐
          │   end   │
          └─────────┘
```

FIG. 4

```
        502                              602
   ┌──────────┐                    ┌──────────┐
   │  memory  │                    │  memory  │
   └─────┬────┘                    └─────┬────┘
         │                               │
   ──────┴──────                   ──────┴──────
         │                               │
   ┌─────┴────┐   501              ┌─────┴────┐   601
   │ processor│                    │ processor│
   └──────────┘                    └──────────┘
```

FIG. 5                              FIG. 6

## INTERNATIONAL SEARCH REPORT

| International application No. |
| --- |
| **PCT/CN2020/122944** |

**A. CLASSIFICATION OF SUBJECT MATTER**

H04N 21/234(2011.01)i

According to International Patent Classification (IPC) or to both national classification and IPC

**B. FIELDS SEARCHED**

Minimum documentation searched (classification system followed by classification symbols)

H04N; H04L; A63F

Documentation searched other than minimum documentation to the extent that such documents are included in the fields searched

Electronic data base consulted during the international search (name of data base and, where practicable, search terms used)

CNPAT, CNKI, WPI, EPODOC: 增强现实, 虚拟现实, 三维, 服务器, 云, 位姿, 姿态, 帧, 延时, 时延, 延迟, 时间差, 补偿, 调整, 校正, 同步, virtual reality, augmented reality, AR, pose, posture, frame, delay, time difference, compensation, synchronization, correct+, adjust+, server, cloud

**C. DOCUMENTS CONSIDERED TO BE RELEVANT**

| Category* | Citation of document, with indication, where appropriate, of the relevant passages | Relevant to claim No. |
| --- | --- | --- |
| X | CN 109126122 A (SHANGHAI CHAI MING HUANG INFORMATION TECHNOLOGY CO., LTD.) 04 January 2019 (2019-01-04)<br>    description, paragraphs 22-57, figures 1-3 | 1-11 |
| A | CN 106796481 A (SHENZHEN DAJIANG INNOVATION TECHNOLOGY CO., LTD.) 31 May 2017 (2017-05-31)<br>    entire document | 1-11 |
| A | CN 107203257 A (SHENZHEN DLODLO TECHNOLOGIES CO., LTD.) 26 September 2017 (2017-09-26)<br>    entire document | 1-11 |
| A | CN 106710002 A (DLP-DIGITAL TECH CO., LTD.) 24 May 2017 (2017-05-24)<br>    entire document | 1-11 |
| A | US 2017289209 A1 (SONY COMPUTER ENTERTAINMENT INC.) 05 October 2017 (2017-10-05)<br>    entire document | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 January 2021** | **20 January 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
**Information on patent family members**

International application No.

**PCT/CN2020/122944**

| Patent document cited in search report | | | Publication date (day/month/year) | Patent family member(s) | | | Publication date (day/month/year) |
|---|---|---|---|---|---|---|---|
| CN | 109126122 | A | 04 January 2019 | None | | | |
| CN | 106796481 | A | 31 May 2017 | WO | 2018058311 | A1 | 05 April 2018 |
| CN | 107203257 | A | 26 September 2017 | None | | | |
| CN | 106710002 | A | 24 May 2017 | None | | | |
| US | 2017289209 | A1 | 05 October 2017 | None | | | |

Form PCT/ISA/210 (patent family annex) (January 2015)

**EP 3 993 428 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911051113